# EUROPÄISCHE PATENTSCHRIFT

(11) **EP 0 816 169 B1**
(45) Veröffentlichungstag und Bekanntmachung des Hinweises auf die Patenterteilung: **28.11.2001**
(21) Anmeldenummer: 97110018.5
(22) Anmeldetag: 19.06.1997
(51) Int. Cl.: B60Q 3/02

(54) **Innenleuchte für Kraftfahrzeuge**
Interior light for vehicle
Eclairage intérieur pour véhicule

(30) Priorität: 29.06.1996 DE 19626171
(43) Veröffentlichungstag der Anmeldung: 07.01.1998
(73) Patentinhaber: Hella KG Hueck & Co., 59552 Lippstadt (DE)
(72) Erfinder: Bergmann, Manfred, 33100 Paderborn (DE); Schlüter, Franz-Josef, 59597 Erwitte (DE); Schulte, Helmut, 59558 Lippstadt (DE)

(56) Entgegenhaltungen:
- DE-A- 3 703 847
- DE-A- 3 730 284
- DE-C- 3 830 783
- DE-C- 4 410 583

## Beschreibung

Die Erfindung betrifft eine Innenleuchte für Kraftfahrzeuge, mit einem Gehäuse, welches mindestens eine Lichtquelle und einen akustischen Signalgeber mit einer Schallaustrittsöffnung aufnimmt, und mit einem auf der vorderen Seite des Gehäuses angeordneten Abschlußelement, welches eine der Schallaustrittsöffnung des Signalgebers zugeordnete Durchgangsöffnung und mindestens einen lichttechnisch wirksamen Lichtscheibenabschnitt mit optischen Elementen aufweist.

Bei einer solchen bekannten Innenleuchte für Kraftfahrzeuge, von der Merkmale in dem deutschen Gebrauchsmuster 88 11 512 und der DE 38 30 783 C1 beschrieben und in der Zeichnung dargestellt sind, weist ein Abschlußelement mit zwei separaten Lichtscheibenabschnitten, eine optische Anzeigevorrichtung und einen akustischen Signalgeber auf. Das Abschlußelement ist aus lichtundurchlässigem Werkstoff hergestellt und nimmt in zwei Freimachungen jeweils einen separaten Lichtscheibenabschnitt auf. Die beiden Lichtscheibenabschnitte sind lösbar an dem Abschlußelement befestigt und sind auf ihrer gesamten Innenseite mit lichttechnisch wirksamen optischen Elementen besetzt. Die Lichtscheibenabschnitte decken jeweils eine Lichtquelle ab, welche in ein Gehäuse eingesetzt ist, an dem das Abschlußelement befestigt ist. In das Abschlußelement sind zwischen den beiden Lichtscheibenabschnitten mehrere nebeneinanderliegende Längsschlitze eingebracht. Einer der Längsschlitze ist einer Schallaustrittsöffnung des Signalgebers zugeordnet und dient für den Schall als Durchgangsöffnung. Die Längsschlitze sind ein auffälliges stilistisches Merkmal des Abschlußelements. Würde in das Abschlußelement statt der vielen nebeneinanderliegenden großen Längsschlitze nur eine der kleinen Schallaustrittsöffnung angepaßte Durchgangsöffnung eingebracht, so könnte ein Betrachter die Durchgangsöffnung als ein nicht technisches Merkmal und somit als fehlerhafte Stelle in dem Abschlußelement werten. Der akustische Signalgeber und die optische Anzeigevorrichtung dient zur Ankündigung eines dem Kraftfahrzeug sich näherndem Hindernis. Die optische Anzeigevorrichtung der Innenleuchte ist in eine nach außen geöffnete Mulde des Abschlußelements eingesetzt. Das Abschlußelement weist wegen den stilistischen Längsschlitzen, dem aus lichtundurchlässigem Werkstoff hergestelltem Teil des Abschlußelements, den separaten Lichtscheiben und der optischen Anzeigevorrichtung ein uneinheitliches Äußeres auf.

Aufgabe der Erfindung ist es, die im Oberbegriff des Anspruchs 1 beschriebene Innenleuchte für Kraftfahrzeuge derart zu gestalten, daß die in das Abschlußelement eingebrachte Durchgangsöffnung für den akustischen Signalgeber und der lichttechnisch wirksame Lichtscheibenabschnitt möglichst unauffällig in das Abschlußelement integrierbar sind. Diese Aufgabe wird nach der Erfindung dadurch gelöst, daß
- das Abschlußelement zumindest in einem zusammenhängenden Bereich, welcher den lichttechnisch wirksamen Lichtscheibenabschnitt und einen den akustischen Signalgeber abdeckenden Abschnitt aufweist, einstückig aus einem lichtdurchlässigem Werkstoff hergestellt ist und mit den optischen Elementen besetzt ist,
- die Schallaustrittsöffnung des Signalgebers und die ihr zugeordnete Durchgangsöffnung des Abschlußelements im wesentlichen gleich groß sind und zusammen einen Schallaustrittskanal bilden.
   Hierbei verhindern die optischen Elemente des Abschlußelements einen störenden Einblick auf den akustischen Signalgeber. Die in das Abschlußelement eingebrachte Durchgangsöffnung ist in ihren Konturen nur sehr unscharf zu erkennen, da der Lichtscheibenabschnitt aus einem lichtdurchlässigem Werkstoff besteht und an die Durchgangsöffnung die optischen Elemente angrenzen. Zudem ist die Durchgangsöffnung so klein gestaltet, daß sie zusammen mit der Schallaustrittsöffnung einen Schallaustrittskanal bildet. Das Abschlußelement ist in seiner gesamten Ausdehnung einheitlich gestaltet, wenn der größte Teil des Abschlußelements oder das gesamte Abschlußelement aus lichtdurchlässigem Werkstoff hergestellt und mit den optischen Elementen besetzt ist.

Bei einer sehr kleinen Durchgangsöffnung des Abschlußelements ist es vorteilhaft, wenn der akustische Signalgeber mit einer die Schallaustrittsöffnung umgebenden Anlagefläche an die Innenseite des mit den optischen Elementen besetztem Bereichs des Abschlußelements angrenzt. Dadurch wird ein unerwünschtes Mitwirken des Abschlußelements als Resonanzkörper verhindert.
Weiterhin ist es vorteilhaft, wenn das Abschlußelement außer seinen optischen Elementen zumindest in dem zusammenhängenden Bereich an seiner Außenseite eine aufgerauhte Oberfläche aufweist oder aus einem trüben oder einem mit Farbstoff gefärbten Werkstoff besteht. Dadurch schirmt dieser Bereich des Abschlußelements das Gehäuse gegen Blicke von außen sehr gut ab.

Bei einer Innenleuchte für Kraftfahrzeuge mit einer mit dem akustischen Signalgeber gekoppelten optischen Anzeigevorrichtung ist es weiterhin vorteilhaft, wenn die optische Anzeigevorrichtung hinter einem Fenster des Abschlußelements angeordnet ist, welches aus einer glasklaren und optikfreien Scheibe besteht, die in einem Teilbereich des Abschlußelements sich unterhalb des Abschlußelements erstreckt, wobei in diesem Teilbereich die Scheibe und das Abschlußelement aneinandergespritzte Teile sind. Hierbei kann das Abschlußelement auch im Bereich der optischen Anzeigevorrichtung außen eine stetig verlaufende Oberfläche aufweisen. Das Abschlußelement ist bis auf das Fenster einheitlich mit optischen Elementen besetzt, wenn die Scheibe außerhalb des Fensters auf ihrer zur Rückseite der Innenleuchte hingerichteten Seite und die anderen Bereiche des Abschlußelements mit optischen Elementen besetzt sind.

Ein Ausführungsbeispiel nach der Erfindung ist in der Zeichnung dargestellt und zwar zeigt
- Figur 1: eine Vorderansicht auf ein Abschlußelement einer Innenleuchte für Kraftfahrzeuge und
- Figur 2: ein Schnitt nach der Linie A-A in Figur 1.

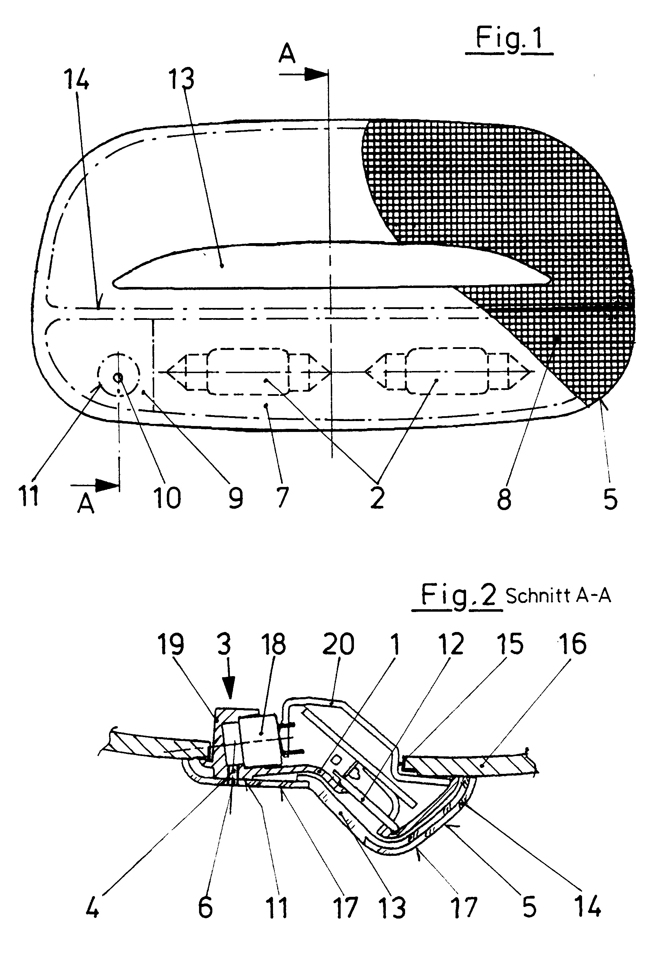

Die Innenleuchte für Kraftfahrzeuge ist mit einem Gehäuse (1) in einer Öffnung (15) einer Fahrzeugwand (16) eingesetzt und mit nicht dargestellten Befestigungsmitteln in der Öffnung (15) gehaltert. Das Gehäuse (1) ist aus lichtundurchlässigem Kunststoff hergestellt und trägt einen akustischen Signalgeber (3), eine optische Anzeigevorrichtung (12) und zwei als Lichtquelle (2) dienende Soffittenlampen. Ein schalenförmiges Abschlußelement (5) deckt die vordere Seite des Gehäuses (1) ab und grenzt mit seinem äußeren umlaufenden Rand an die äußere Seite der Fahrzeugwand (16) an. Das Abschlußelement (5) ist durch nicht dargestellte Befestigungsmittel lösbar mit dem Gehäuse (1) verbunden. Das Abschlußelement (5) ist bis auf eine in einem Fenster des Abschlußelements (5) angeordneten Scheibe (13) aus einem lichtdurchlässigem weißen Kunststoff hergestellt. Die Scheibe (13) ist aus glasklarem Werkstoff hergestellt und erstreckt sich in einem Teilbereich (14) des Abschlußelements (5) unterhalb des Abschlußelements. Die sich unterhalb des Abschlußelements (5) erstreckenden Randbereiche der Scheibe (13) sind von dem Abschlußelement (5) überspritzt und gehen somit eine unlösbare Verbindung mit dem Abschlußelement ein. Der Teilbereich (14) des Abschlußelements (5) ist dachförmig nach außen gestellt und weist auf einer Seite des Daches die Scheibe (13) auf, hinter welcher die optische Anzeigevorrichtung (12) angeordnet ist. An den Teilbereich (14) des Abschlußelements (5) grenzt der die Lichtquellen (2) abdeckende Lichtscheibenabschnitt (7) und der den akustischen Signalgeber (3) abdeckende Abschnitt (9) des Abschlußelements (5) an. Der Teilbereich (14), der Lichtscheibenabschnitt (7) und der Abschnitt (9) sind in Figur 1 durch eine strichpunkturte Linie begrenzt. Das Abschlußelement (5) ist bis auf den die Scheibe (13) aufnehmenden Fensterbereich auf seiner Rückseite mit optischen Elementen (8) besetzt, welche in Figur 1 nur in einem Teilstück des Abschlußelements (5) gezeichnet sind. Im Teilbereich (14) des Abschlußelements (5) sind die optischen Elemente (8) auf die Rückseite des sich unterhalb des Abschlußelements (5) erstreckenden Randbereichs der Scheibe (13) angebracht, während in dem Lichtscheibenabschnitt (7) und dem Abschnitt (9) die optischen Elemente unmittelbar an das Abschlußelement (5) angebracht sind. Das Abschlußelement (5) weist wegen der optischen Elemente (8) ein einheitliches äußeres Erscheinungsbild auf. Ein störender Durchblick durch das Abschlußelement (5) hindurch ist wegen der optischen Elemente (8), dem weißen Werkstoff des Abschlußelements (5) und einer aufgerauhten äußeren Oberfläche (17) des Abschlußelements (5) nicht möglich. Nur im Bereich des Lichtscheibenabschnitts (7) sind die optischen Elemente (8) zusätzlich lichttechnisch wirksam und dienen zur Zerstreuung des aus den Lichtquellen (2) austretenden Lichts. Der unmittelbar neben dem Lichtscheibenabschnitt (7) liegende Abschnitt (9) des Abschlußelements (5) ist mit einer kreisrunden Durchgangsöffnung (6) versehen, welche der Größe einer Schallaustrittsöffnung (4) des Signalgebers (3) angepaßt ist. Der Signalgeber (3) liegt mit einer die Schallaustrittsöffnung (4) umgebenden kreisringförmigen Anlagefläche (11) an der Innenseite des Abschlußelements (5) an. Die Außenabmessung der Durchgangsöffnung (6) des Abschlußelements (5) sollte nicht größer sein als die dreifache Wandstärke des Abschnitts (9) des Abschlußelements (5). Der Signalgeber (3) weist einen Schallwandler (18) auf, welcher in eine hülsenförmige Aufnahme (19) des Gehäuses (1) eingesetzt ist. Der Schallwandler (18) und die optische Anzeigevorrichtung (12) sind durch eine auf die Rückseite des Gehäuses (1) aufgesetzte Kappe (20) gehaltert.

Die Innenleuchte ist im hinteren Teil des Fahrgastraums eines Kraftfahrzeugs an dem Dachhimmel befestigt. Die beiden Lichtquellen (2) erfüllen die Funktion des Leselichts. Die optische Anzeigevorrichtung (12) zeigt dem Fahrer im Innenspiegel bei Rückwärtsfahrt an, ob ein Hindernis sich nahe dem Fahrzeug befindet und wie weit dieses Hindernis vom Fahrzeug entfernt ist. Bei einer Unterschreitung eines bestimmten Abstandes zwischen Fahrzeug und Hindernis ertönt ein Warnton des akustischen Signalgebers (3).

### Bezugszeichenliste

- 1: Gehäuse
- 2: Lichtquelle
- 3: Signalgeber
- 4: Schallaustrittsöffnung
- 5: Abschlußelement
- 6: Durchgangsöffnung
- 7: Lichtscheibenabschnitt
- 8: optische Elemente
- 9: Abschnitt
- 10: Schallaustrittskanal
- 11: Anlagefläche
- 12: optische Anzeigevorrichtung
- 13: Scheibe
- 14: Teilbereich
- 15: Öffnung
- 16: Fahrzeugwand
- 17: Oberfläche
- 18: Schallwandler
- 19: Aufnahme
- 20: Kappe

## Patentansprüche

1. Innenleuchte für Kraftfahrzeuge, mit einem Gehäuse (1), welches mindestens eine Lichtquelle (2) und einen akustischen Signalgeber (3) mit einer Schallaustrittsöffnung (4) aufnimmt, und mit einem auf der vorderen Seite des Gehäuses (1) angeordneten Abschlußelement (5), welches eine der Schallaustrittsöffnung (4) des Signalgebers (3) zugeordnete Durchgangsöffnung (6) und mindestens einen lichttechnisch wirksamen Lichtscheibenabschnitt (7) mit optischen Elementen (8) aufweist, **dadurch gekennzeichnet, daß**
- das Abschlußelement (5) zumindest in einem zusammenhängendem Bereich (7,9), welcher den lichttechnisch wirksamen Lichtscheibenabschnitt (7) und einen den akustischen Signalgeber (3) abdeckenden Abschnitt (9) aufweist, einstückig aus einem lichtdurchlässigem Werkstoff hergestellt ist und mit den optischen Elementen (8) besetzt ist,
- die Schallaustrittsöffnung (4) des Signalgebers (3) und die ihr zugeordnete Durchgangsöffnung (6) des Abschlußelements (5) im wesentlichen gleich groß sind und zusammen einen Schallaustrittskanal (10) bilden.

2. Innenleuchte nach Anspruch 1, **daduch gekennzeichnet, daß** der akustische Signalgeber (3) mit einer die Schallaustrittsöffnung (4) umgebenden Anlagefläche (11) an die Innenseite des mit den optischen Elementen (8) besetzten Bereichs (7,9) des Anschlußelements (5) angrenzt.

3. Innenleuchte nach Anspruch 1 oder 2, **dadurch gekennzeichnet, daß** das Abschlußelement (5) zumindest in dem zusammenhängenden Bereich (7,9) an seiner Außenseite eine aufgerauhte Oberfläche (17) aufweist.

4. Innenleuchte nach einem der Ansprüche 1 bis 3, **dadurch gekennzeichnet, daß** das Abschlußelement (5) zumindest in dem zusammenhängenden Bereich (7,9) aus einem trüben Werkstoff besteht.

5. Innenleuchte nach einem der Ansprüche 1 bis 4, **dadurch gekennzeichnet, daß** das Abschlußelement (5) zumindest in dem zusammenhängenden Bereich (7,9) aus einem mit Farbstoff gefärbten Werkstoff besteht.

6. Innenleuchte nach einem der Ansprüche 1 bis 5, **dadurch gekennzeichnet, daß** die Schallaustrittsöffnung (4) des Signalgebers (3) und die ihr zugeordnete Durchgangsöffnung (6) des Abschlußelements (5) deckungsgleich übereinander liegen.

7. Innenleuchte nach einem der Ansprüche 1 bis 5, **dadurch gekennzeichnet, daß** die größte Außenabmessung der Durchgangsöffnung (6) des Abschlußelements (5) maximal der dreifachen Wandstärke des Abschnitts (9) entspricht.

8. Innenleuchte für Kraftfahrzeuge, mit einer mit dem akustischen Signalgeber (3) gekoppelten optischen Anzeigevorrichtung (12) nach einem der Ansprüche 1 bis 7, **dadurch gekennzeichnet, daß** die optische Anzeigevorrichtung (12) hinter einem Fenster des Abschlußelements (5) angeordnet ist, welches aus einer glasklaren und optikfreien Scheibe (13) besteht, die mindestens in einem Teilbereich (14) des Abschlußelements (5) sich unterhalb des Abschlußelements (5) erstreckt, wobei die Scheibe (13) und das Abschlußelement (5) in diesem Teilbereich (14) aneinandergespritzte Teile sind.

9. Inneleuchte nach Anspruch 8, **dadurch gekennzeichnet, daß** die Scheibe (13) außerhalb des Fensters auf ihrer zur Rückseite der Innenleuchte hingerichteten Seite mit den optischen Elementen (8) besetzt ist.

## Claims

1. Interior light for motor vehicles, comprising a housing (1) which accommodates at least one light source (2) and an acoustic signal emitter (3) with a sound outlet opening (4), and a sealing element (5) which is arranged on the front side of the housing (1) and includes a channel opening (6) which is associated with the sound outlet opening (4) of the signal emitter (3), and at least one light-technically effective light disc section (7) with optical elements (8), **characterised in that**
- the sealing element (5) is made in one piece of a light permeable material at least in an associated area (7, 9) which includes the light-technically effective light disc section (7) and a section (9) which covers the acoustic sound emitter (3), and fitted with the optical elements (8);
- the sound outlet opening (4) of the signal emitter (3) and its associated channel opening (6) of the sealing element (5) are essentially of the same size and jointly form a sound outlet channel (10).

2. Interior light according to Claim 1, **characterised in that** the acoustic signal emitter (3) abuts with an abutment surface (11) which surrounds the sound outlet opening (4) against the inside of the area (7, 9) of the sealing element (5) which is fitted with the optical elements (8).

3. Interior light according to Claim 1 or 2, **characterised in that** the sealing element (5) has at least in the joined area (7, 9) on its exterior a roughened surface (17).

4. Interior light according to one of Claims 1 to 3, **characterised in that** the sealing element (5) is at least in the joined area (7, 9) made of a dull material.

5. Interior light according to one of Claims 1 to 4, **characterised in that** the sealing element (5) is at least in the joined area (7, 9) made of a paint-coloured material.

6. Interior light according to one of Claims 1 to 5, **characterised in that** the sound outlet opening (4) of the signal emitter (3) and its associated channel opening (6) of the sealing element are congruent one above the other.

7. Interior light according to one of Claims 1 to 5, **characterised in that** the largest outside dimension of the channel opening (6) of the sealing element (5) equals maximal three times the wall thickness of the section (9).

8. Interior light for motor vehicles, comprising a display unit (12) which is coupled to the acoustic signal emitter (3) according to one of Claims 1 to 7, **characterised in that** the optical display unit (12) is arranged behind a window of the sealing element (5) which is made of a clear glass and optics-free disc (13) which extends at least in a partial area (14) of the sealing element (5) below the sealing element (5), and the disc (13) and the sealing element (5) are parts which are moulded together in this partial area (14).

9. Interior light according to Claim 8, **characterised in that** the disc (13) is outside the window at its side which is oriented towards the rear side of the interior light fitted with the optical elements. (8).

## Revendications

1. Lampe intérieure pour véhicules automobiles, comportant un boîtier (1), qui reçoit au moins une source lumineuse (2) et un générateur de signal acoustique (3) avec une ouverture de sortie de son (4) et comportant un élément de fermeture (5) agencé sur la face antérieure du boîtier (1), lequel présente une ouverture de passage (6) associée à l'ouverture de sortie de son (4) du générateur de signal (3) et au moins un tronçon de plaque d'éclairement (7) techniquement actif sur le plan lumineux avec des éléments optiques (8), **caractérisée en ce que**
- au moins dans une région continue (7, 9) qui présente le tronçon de plaque d'éclairement (7) techniquement actif sur le plan lumineux et un tronçon (9) couvrant le générateur de signal acoustique (3), l'élément de fermeture (5) est réalisé d'un seul tenant en un matériau transparent et il est occupé par des éléments optiques (8),
- l'ouverture de sortie de son (4) du générateur de signal (3) et l'ouverture de passage (6), qui lui est associée, de l'élément de fermeture (5) ont sensiblement la même taille et forment ensemble un canal de sortie de son (10).

2. Lampe intérieure selon la revendication 1, **caractérisée en ce que** le générateur de signal (3) est juxtaposé par une surface d'appui (11) entourant l'ouverture de sortie de son (4) à la face intérieure de la région (7, 9) de l'élément de fermeture (5) qui est occupée par les éléments optiques (8).

3. Lampe intérieure selon l'une ou l'autre des revendications 1 et 2, **caractérisée en ce que** l'élément de fermeture (5) présente une surface (17) rugueuse sur sa face extérieure, au moins dans la région continue (7, 9).

4. Lampe intérieure selon l'une quelconque des revendications 1 à 3, **caractérisée en ce que** l'élément de fermeture (5) est constitué par un matériau trouble, au moins dans la région continue (7, 9).

5. Lampe intérieure selon l'une quelconque des revendications 1 à 4, **caractérisée en ce que** l'élément de fermeture (5) est constitué par un matériau coloré par un colorant, au moins dans la région continue (7, 9).

6. Lampe intérieure selon l'une quelconque des revendications 1 à 5, **caractérisée en ce que** l'ouverture de sortie de son (4) du générateur de signal (3) et l'ouverture de passage (6), qui lui est associée, de l'élément de fermeture (5) sont situés l'un au-dessus l'autre en coïncidence.

7. Lampe intérieure selon l'une quelconque des revendications 1 à 5, **caractérisée en ce que** la plus grande dimension extérieure de l'ouverture de passage (6) de l'élément de fermeture (5) correspond au maximum à trois fois l'épaisseur de paroi du tronçon (9).

8. Lampe intérieure pour véhicules automobiles, comportant un indicateur (12) optique accouplé au générateur de signal acoustique (3) selon l'une quelconque des revendications 1 à 7, **caractérisée en ce que** l'indicateur (12) optique est agencé derrière une fenêtre de l'élément de fermeture (5) qui est constitué par une plaque (13) transparente et dénuée d'éléments optiques, laquelle s'étend au moins dans une région partielle (14) de l'élément de fermeture (5) en dessous de l'élément de fermeture (5), la plaque (13) et l'élément de fermeture (5) étant dans cette région partielle des pièces moulées par injection l'une avec l'autre.

9. Lampe intérieure selon la revendication 8, **caractérisée en ce que** la plaque (13) est occupée par les éléments optiques (8) en dehors de la fenêtre sur sa face orientée vers la face postérieure de la lampe intérieure.
